# EUROPÄISCHE PATENTSCHRIFT

(11) **EP 0 831 010 B1**
(45) Veröffentlichungstag und Bekanntmachung des Hinweises auf die Patenterteilung: **13.02.2002**
(21) Anmeldenummer: 97116119.5
(22) Anmeldetag: 17.09.1997
(51) Int. Cl.: B62D 1/18

(54) **Klemmvorrichtung für eine verstellbare Lenksäule eines Kraftfahrzeuges**
Clamping device for an adjustable steering column in a motor vehicle
Dispositif de serrage pour une colonne de direction réglable dans un véhicule automobile

(30) Priorität: 19.09.1996 DE 19638282
(43) Veröffentlichungstag der Anmeldung: 25.03.1998
(73) Patentinhaber: Nacam Deutschland GmbH, 49448 Lemförde (DE)
(72) Erfinder: Baumann, Janet, 49356 Diepholz (DE); Schäfer, Burkhard, 27777 Ganderkesee (DE)

(56) Entgegenhaltungen:
- EP-A- 0 242 928
- EP-A- 0 345 101
- DE-A- 4 400 306
- DE-C- 4 118 863
- FR-A- 2 579 159

## Beschreibung

Die vorliegende Erfindung betrifft eine Klemmvorrichtung für eine verstellbare Lenksäule eines Kraftfahrzeuges nach dem Oberbegriff des Patentanspruches 1.

Klemmvorrichtungen mit den gattungsgemäßen Merkmalen werden sowohl in Personenkraftfahrzeugen als auch in Lastkraftfahrzeugen zur zeitweiligen Arretierung von Lenksäulen eingesetzt, die der Fahrer vorher seinen Bedürfnissen entsprechend in Höhe und Neigung eingestellt hat.

Aus der gattungsgemäßen EP 0 345 101 A1 ist eine derartige Klemmvorrichtung für eine verstellbare Lenksäule eines Kraftfahrzeuges zur lösbaren Festlegung eines die Lenksäule aufnehmenden Gehäuses an einer mit der Karosserie des Kraftfahrzeuges fest verbundenen Halterung bekannt, die mindestens zwei Reibflächenpaarungen aufweist, welche aus jeweils mindestens einer an der Karosseriehalterung angeordneten Reibfläche und je mindestens einer korrespondierenden Reibfläche an dem Lenksäulengehäuse und einem entlang einer Achse senkrecht zur Ebene der Reibflächenpaarungen axial beweglichen Kippstiftmechanismus mit zwei axial hintereinander angeordneten, gemeinsam betätigbaren Klemmechaniken zur Erzeugung der Klemmkräfte besteht.

Ferner ist aus der DE 44 00 306 eine Klemmvorrichtung bekannt, bei der zwei Reibflächenpaarungen durch einen Kippmechanismus gegeneinander gepreßt werden können. Der Kippmechanismus besteht aus einem senkrecht zu den Reibflächenpaarungen angeordneten, gegen axiale Verschiebung festgelegten Bolzen und aus drei in ihrer Längsachse etwa parallel zur Bolzenachse angeordneten Kippstiften, die sich mit einem Ende in einem Widerlager an der Karosseriehaltung abstützen und mit ihrem anderen Ende in einem Bolzenbund aufgenommen sind, wobei eine Verdrehung des Bolzenbundes in eine Drehrichtung die Kippstifte in eine Klemmlage bringt, in der sie die notwendigen Klemmkräfte zur Arretierung des Lenksäulengehäuses bereitstellen. Eine Verdrehung des Bolzenbundes in die entgegengesetzte Drehrichtung bringt die Klemmstifte in eine die Klemmverbindung aufhebende Lösestellung.

Aus EP 0 242 928 A1 geht darüber hinaus ein Klemm-Mechanismus zum Fixieren eines Lenksäulengehäuses eines Kraftfahrzeuges hervor bei dem das Lenksäulengehäuse in einer Richtung, die senkrecht zur Längsrichtung der Lenksäule steht, verstellbar ist.
Der Klemm-Mechanismus umfaßt einen Klemmbolzen, der in dem Lenksäulengehäuse angebracht ist sowie einen Hebel. Der Klemmbolzen wird mit dem Hebel gespannt, sodaß das Lenksäulengehäuse fixierbar ist.
Wenigstens ein federndes Element zwischen Lenksäulengehäuse und Klemmbolzen wird bei der Bewegung des Hebels in Richtung "Klemmposition" entspannt, bevor der Hebel diese Klemmposition erreicht.
Der Hebel und der Klemmbolzen sind mittels mehrerer Stifte miteinander verbunden, wobei sich die Achslinien dieser Stifte und die Achslinien des Klemmbolzens in dessen entspanntem Zustand kreuzen.
An dem Klemmbolzen ist ferner ein Teller befestigt, der eine Art Widerlager bildet. Die Stifte sind zwischen dem Teller und dem Hebel angeordnet.
Im entspannten Zustand des Klemmbolzens ist jeder Stift länger, als die in Längsrichtung gemessene Strecke zwischen dem Teller und dem Hebel.
Die Stifte kippen bei Bewegung des Hebels in die Klemmposition um ihre Auflagerungen in einem Ausmaß, daß sie eine Position passieren, in der die Achslinie der Stifte parallel zu der Achslinie des Bolzens verläuft.
Eine derartige Lösung hat den Nachteil, daß nur ein recht geringer axialer Hub erzeugbar ist, sodaß die Klemmkraft beispielsweise bei Verwendung einer Airbageinheit nicht mehr ausreichend sein kann.

Die gestiegenen Sicherheitsanforderungen in der Kraftfahrzeugtechnik führen seit einiger Zeit zum verstärkten Einsatz von Airbag-Systemen, die bei einem Frontalzusammenstoß die Berührung insbesondere des Fahrers mit dem in den Fahrgastraum hineinragenden Lenkrad verhindern sollen. Derartige Airbag-Systeme erfordern im Crashfall eine besonders stabile Gestaltung der Lenksäulenbaueinheiten, damit diese Systeme ihre volle Wirkung entfalten können.

Aufgabe der vorliegenden Erfindung ist es, eine Klemmvorrichtung mit den gattungsgemäßen Merkmalen so weiterzuentwickeln, daß sie bei einfachem Aufbau auch den gestiegenen Sicherheitserwartungen bei Unfällen entspricht und insbesondere die beim Einbau von Airbag-Einrichtungen notwendigen hohen Klemmkräfte bereitstellen kann, wobei Fertigungstoleranzen beziehungsweise Verschleißerscheinungen ausgeglichen werden sollten.

Diese Aufgabe wird erfindungsgemäß dadurch gelöst, daß der Kippstiftmechanismus der Klemmvorrichtung zwei einzelne, separat justierbare, über eine Synchronhülse gemeinsam betätigbare Klemmechaniken aufweist.

Durch diese erfindungsgemäße Gestaltung sind bei der Klemmvorrichtung besonders hohe Klemmkräfte erzielbar, da durch die Aufteilung des Kippstiftmechanismus in zwei separate Kippstiftmechaniken die Klemmwege zur Erzeugung der Klemmkräfte durch die Kippstifte vergrößert sind. Die konstruktive Gestaltung mit identischen Bauteilen für beide Kippstiftmechaniken ist einfach und übersichtlich und ermöglicht eine zeit- und kostensparende Montage der Klemmvorrichtung. Die Betätigung der Klemmvorrichtung gestaltet sich durch den Einsatz der für beide Kippmechanismen zuständigen Synchronhülse genauso einfach, wie bei den bisherigen gattungsgemäßen Klemmvorrichtungen.

Weitere spezielle Ausgestaltungen des Gegenstandes der Erfindung ergeben sich aus den Merkmalen der Unteransprüche. Es hat sich insbesondere als vorteilhaft herausgestellt, die Klemmechanismen im Innern der Synchronhülse anzuordnen. Durch diese Anordnung wird ein besonders platzsparender Aufbau der gesamten Klemmvorrichtung erzielt.

Darüber hinaus hat es sich als besonders zweckmäßig erwiesen, die Synchronhülse an ihrer Außenseite als Zahnriemenrad auszubilden. Diese besondere Ausgestaltung ermöglicht den elektromotorischen oder pneumatischen Antrieb der Klemmvorrichtung und entlastet den Fahrer von mechanischen Tätigkeiten.

Die beiden zum Einsatz kommenden Kippmechanismen lassen sich mit Hilfe von Schrauben jede für sich feinfühlig justieren. Durch diese Maßnahme lassen sich Fertigungstoleranzen ausgleichen, darüber hinaus kann ein eventuell auftretender Verschleiß der Klemmechanismen problemlos ausgeglichen werden.

Im Folgenden wird ein Ausführungsbeispiel des Gegenstandes der Erfindung anhand der beigefügten Figur näher erläutert:

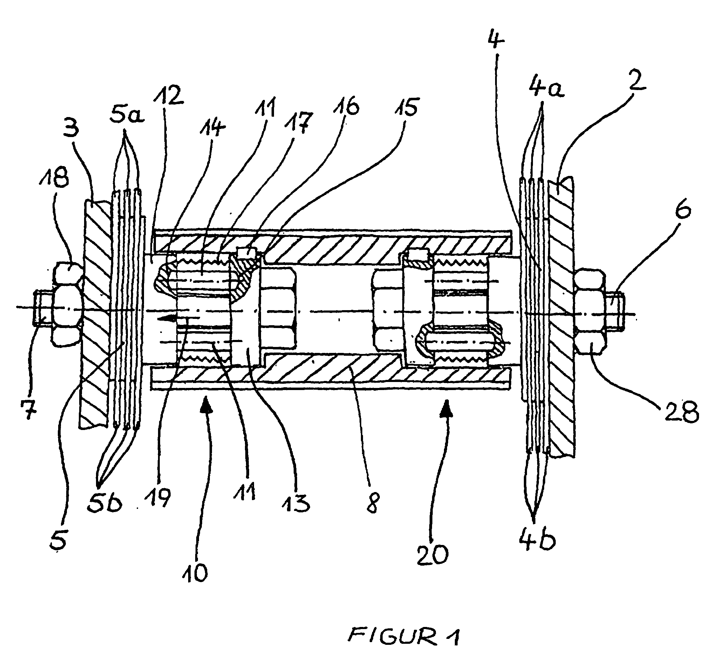

- Figur 1: zeigt eine Schnittdarstellung durch eine zwischen der karosserie-seitigen Halterung des Kraftfahrzeuges angeordnete Klemmvor-richtung.

Aus Gründen der Übersichtlichkeit wurde auf die Darstellung der Gesamtmechanik einer verstellbaren Kraftfahrzeuglenksäulenbaueinheit verzichtet. In der Figur 1 sind schematisch zwei Schenkel 2 und 3 der karosserieseitigen Lenksäulenhalterung angedeutet. An den einander zugewandten Innenseiten der Schenkel befindet sich jeweils ein Lamellenpaket 4 und 5, welches üblicherweise zur Erhöhung der Reibkräfte eingesetzt wird und aus ineinander verzahnten Einzellamellen 4a und 4b beziehungsweise 5a und 5b besteht. Die mit a und b bezeichneten Einzellamellen sind jeweils zum einen an der Karosseriehalterung und zum anderen an dem verstellbaren Lenksäulengehäuse befestigt und stellen die für die Erzeugung der Klemmkräfte notwendigen Reibpaarungen dar. Sowohl in den Lamellenpaketen 4 und 5 als auch in den karosserieseitigen Halteschenkeln 2 und 3 sind Durchbrüche angeordnet, durch die je ein Schraubbolzen 6 und 7 hindurchgeführt ist. Auf diesen Schraubbolzen sind die einzelnen Klemmechaniken 10 und 20 montiert. Sie befinden sich innen im Zwischenraum zwischen den Karosseriehalteschenkeln 2 und 3 und werden von einer Synchronhülse 8 bereichsweise aufgenommen.

Die Klemmechaniken 10 und 20 sind symmetrisch aufgebaut, so daß sich die Beschreibung im Folgenden auf die Klemmechanik 10 beschränkt. Die Klemmechanik 10 besteht aus den Kippstiften 11, die rotationssymmetrisch um den mittigen Schraubbolzen 7 herum angeordnet sind und sich mit ihren jeweiligen Enden in zwei Klemmscheiben 12 und 13 abstützen. Zu diesem Zweck sind in den jeweiligen Klemmscheiben 12 und 13 Widerlager 14 und 15 angeordnet, die in ihrer geometrischen Gestaltung den gerundeten Enden der Kippstifte 11 entsprechen.

Die Klemmscheibe 12 ist innerhalb der Synchronhülse 8 axial verschieblich angeordnet, wohingegen die Klemmscheibe 13 drehfest beispielsweise durch eine Paßfederverbindung 16 mit der Synchronhülse 8 verbunden ist. Desweiteren ist zwischen den Klemmscheiben 12 und 13 eine Feder 17 angeordnet.
Die Erzeugung der Klemmkräfte durch die Klemmechanik beruht darauf, daß eine Verdrehung der Synchronhülse 8 und der damit verbundenen Klemmscheibe 13 zu einer Verdrehung, d.h. zu einem Kippen der Kippstifte 11 führt, wobei in der axial entspannten Stellung der Klemmvorrichtung die Kippstifte 11 zur Mittellinie des Schraubbolzens 7 einen spitzen Winkel bilden.

Eine Drehung der Synchronhülse 8 in Richtung der Verriegelungsstellung führt dazu, daß sich die Kippstifte 11 parallel zur Mittellinie des Schraubbolzens 7 ausrichten und dort über eine Totpunktlage in eine stabile Arretierungsstellung gelangen. Durch diese Bewegung der Kippstifte 11 wird die Klemmscheibe 12 axial in Richtung des Pfeiles 19 verschoben und preßt das Lamellenpaket 5 zusammen. Die axiale Verschiebung der Klemmscheibe 12 erzeugt somit die notwendigen Klemmkräfte zur Verriegelung der Lenksäule.

Da in der erfindungsgemäßen Klemmvorrichtung zwei der oben beschriebenen Klemmechaniken vorhanden sind, ergibt sich eine gegenüber herkömmlichen Bauweisen erhebliche Erhöhung der Klemmwirkung. Beide Klemmechaniken 10 und 20 werden über die gemeinsame Synchronhülse 8 betätigt, so daß sie gleichzeitig ihre volle Klemmwirkung entfalten.

Die Synchronhülse 8 ist in diesem Ausführungsbeispiel außen mit einer Zahnriemenradkontur versehen. Über diese Kontur kann ein Zahnriemen geführt werden, der elektrisch oder pneumatisch antreibbar ist, und somit die Drehbewegung zur Verriegelung bzw. Entriegelung der Klemmvorrichtung vornehmen kann. Eine derartige Betätigungsmöglichkeit durch einen Elektromotor erleichtert in erheblichem Maße die Handhabung einer derartigen erfindungsgemäßen Klemmvorrichtung.

Natürlich ist es auch denkbar, statt des direkt an der Außenkontur der Synchronhülse 8 angeordneten Zahnriemenkontur auf die Hülse ein separates Zahnriemenrad aufzusetzen. Darüber hinaus kann natürlich auf die Außenseite der Synchronhülse 8 ein Handhebel aufgesetzt werden, falls eine gesteigerte Komfortfunktion der Kemmvorrichtung nicht gewünscht wird.
An der Außenseite der beiden Schenkel 2 und 3 der karosserieseitigen Halterung sind die Klemmechaniken 10 und 20 durch jeweils eine Sechskantmutter 18 bzw. 28 einstellbar.

### Bezugszeichenliste:

- 2.: Schenkel
- 3.: Schenkel
- 4.: Lamellenpaket
- 4a.: Einzellamellen
- 4b.: Einzellamellen
- 5: Lamellenpaket
- 5a.: Einzellamellen
- 5b.: Einzellamellen
- 6.: Schraubbolzen
- 7.: Schraubbolzen
- 8.: Synchronhüse
- 10.: Klemmechanik
- 11.: Kippstift
- 12.: Klemmscheibe
- 13.: Klemmscheibe
- 14.: Widerlager
- 15.: Widerlager
- 16.: Paßfederverbindung
- 17.: Feder
- 18.: Sechskantmutter
- 19: Pfeil (nur zur Richtungsangabe)
- 20.: Klemmechanik
- 21.: Klemmstift
- 28.: Sechskantmutter

## Patentansprüche

1. Klemmvorrichtung für eine verstellbare Lenksäule eines Kraftfahrzeuges zur lösbaren Festlegung eines die Lenksäule aufnehmenden Gehäuses an einer mit der Karosserie des Kraftfahrzeuges fest verbundenen Halterung, beinhaltend mindestens zwei Reibflächenpaarungen (4a und 4b; 5a und 5b), die aus jeweils mindestens einer an der Karosseriehalterung angeordneten Reibfläche (4a; 5a) und je mindestens einer korrespondierenden Reibfläche (4b; 5b) an dem Lenksäulengehäuse bestehen und einem entlang einer Achse senkrecht zur Ebene der Reibflächenpaarungen axial beweglichen Kippstiftmechanismus mit zwei axial hintereinander angeordneten, gemeinsam betätigbaren Klemmechaniken (10, 20) zur Erzeugung der Klemmkräfte,
**dadurch gekennzeichnet, daß** der Kippstiftmechanismus zwei einzelne, über eine Synchronhülse (8) gemeinsam betätigbare, separat justierbare Klemmechaniken (10, 20) aufweist.

2. Klemmvorrichtung nach Anspruch 1,
**dadurch gekennzeichnet, daß** die Klemmechaniken (10, 20) im Innern der Synchronhülse (8) angeordnet sind.

3. Klemmvorrichtung nach Anspruch 1 oder 2,
**dadurch gekennzeichnet, daß**
die Synchronhülse (8) an ihrer Außenseite als Zahnriemenrad ausgebildet ist.

4. Klemmvorrichtung nach Anspruch 1 oder 2,
**dadurch gekennzeichnet, daß**
die Synchronhülse (8) eine Aufnahme für einen Handhebel aufweist.

## Claims

1. Clamping device for an adjustable steering column of a motor vehicle for detachably securing a housing accommodating the steering column to a mount which is firmly connected to the body of the motor vehicle, comprising at least two pairs of friction surfaces (4a and 4b; 5a and 5b), which each consist of at least one friction surface (4a; 5a) disposed at the body mount and at least one corresponding friction surface (4b; 5b) at the steering column housing, and a tilting pin mechanism which can move axially along an axis perpendicularly to the plane of the pairs of friction surfaces and has two clamping mechanisms (10, 20), which are disposed axially one behind the other and can be jointly actuated, for producing the clamping forces,
**characterised in that**
the tilting pin mechanism comprises two individual, separately adjustable clamping mechanisms (10, 20), which can be jointly actuated by a synchronising sleeve (8).

2. Clamping device according to Claim 1,
**characterised in that**
the clamping mechanisms (10, 20) are disposed inside the synchronising sleeve (8).

3. Clamping device according to Claim 1 or 2,
**characterised in that**
the outside of the synchronising sleeve (8) is formed as a toothed belt pulley.

4. Clamping device according to Claim 1 or 2,
**characterised in that**
the synchronising sleeve (8) comprises a receptacle for a hand lever.

## Revendications

1. Dispositif de serrage pour une colonne de direction réglable d'un véhicule automobile pour un verrouillage amovible d'un boîtier entourant la colonne de direction à un point d'ancrage lié de manière fixe à la carrosserie du véhicule, comportant au moins deux couples (4a, 4b ; 5a, 5b) de surfaces de friction qui consistent en au moins une surface (4a ; 5a) de friction associée au point d'ancrage à la carrosserie et au moins une surface correspondante (4b ; 5b) de friction associée au boîtier de colonne de direction, et un mécanisme mobile à tige basculante pouvant se déplacer le long d'un axe perpendiculaire au plan des couples de surfaces de friction ayant deux mécanismes (10, 20) de serrage disposés axialement l'un derrière l'autre et pouvant être actionnés ensemble pour produire la force de serrage,
**caractérisé en ce que** le mécanisme mobile à tige basculante comporte deux mécanismes individuels (10, 20) de serrage pouvant être actionnés en commun par un manchon (8) de synchronisation, et ajustables séparément.

2. Dispositif de serrage selon la revendication 1, **caractérisé en ce que** les mécanismes (10, 20) de serrage sont disposés à l'intérieur du manchon (8) de synchronisation.

3. Dispositif de serrage selon la revendication 1 ou 2, **caractérisé en ce que** le manchon (8) de synchronisation est construit sur sa face extérieure sous la forme d'une poulie pour courroie crantée.

4. Dispositif de serrage selon la revendication 1 ou 2, **caractérisé en ce que** le manchon (8) de synchronisation présente un raccord pour un levier de manoeuvre manuel.
